Europäisches Patentamt

European Patent Office

Office européen des brevets

(11) **EP 1 191 895 B1**

(19)

(12) **FASCICULE DE BREVET EUROPEEN**

(45) Date de publication et mention
de la délivrance du brevet:
**12.02.2003 Bulletin 2003/07**

(21) Numéro de dépôt: **00949643.1**

(22) Date de dépôt: **05.07.2000**

(51) Int Cl.⁷: **A61C 1/00**, B25H 3/00

(86) Numéro de dépôt international:
**PCT/FR00/01932**

(87) Numéro de publication internationale:
**WO 01/001878 (11.01.2001 Gazette 2001/02)**

(54) **DISPOSITIF D'ASSERVISSEMENT D'UNE PIECE A MAIN DENTAIRE A VIBRATION ULTRASONORE**

**KONTROLLVORRICHTUNG FÜR EIN ZAHNÄRZTLICHES ULTRASCHALLHANDSTÜCK**

**POWER ASSISTANCE DEVICE FOR AN ULTRASONIC VIBRATION DENTAL HANDPIECE**

(84) Etats contractants désignés:
**AT BE CH CY DE DK ES FI FR GB GR IE IT LI LU
MC NL PT SE**

(30) Priorité: **05.07.1999 FR 9908643**

(43) Date de publication de la demande:
**03.04.2002 Bulletin 2002/14**

(73) Titulaire: **Satelec - Société pour la Conception
des Applications des Techniques Electroniques
33700 Merignac (FR)**

(72) Inventeurs:
• **MARIAULLE, Dominique
F-33185 Le Haillan (FR)**
• **CAPET, Xavier
F-33610 Cestat Gazinet (FR)**
• **CABRIGNAC, Pascal
F-33700 Mérignac (FR)**

(74) Mandataire: **Puiroux, Guy
Cabinet Guiu & Bruder
68, rue d'Hauteville
75010 Paris (FR)**

(56) Documents cités:
**FR-A- 2 550 440          US-A- 4 168 447
US-A- 4 371 816**

## Description

La présente invention concerne un dispositif électronique d'asservissement pour pièce à main dentaire du type dans lequel la vibration d'un outil est obtenue au moyen d'un transducteur piézo-électrique.

On sait qu'un transducteur piézo-électrique générateur de vibrations ultrasonores est, dans la mesure du possible, utilisé à la résonance de façon à obtenir des amplitudes et une puissance des vibrations maximales (voir par exemple US-A-4 371 816). Lorsqu'un tel transducteur, auquel est couplé mécaniquement un outil, vient en contact au cours d'une phase de travail avec des tissus de natures différentes, c'est-à-dire des tissus durs, des tissus mous, avec ou non présence d'un liquide, il voit son circuit résonnant évoluer au cours du travail. On sait que dans une telle pièce à main la vitesse de vibration du transducteur est une fonction directe du courant électrique qui circule dans celui-ci et que l'effort nécessaire à cette vibration est une fonction directe de la tension d'alimentation aux bornes dudit transducteur. On comprend que si l'on souhaite faire fonctionner une pièce à main avec un rendement optimal, les vibrations du transducteur doivent correspondre à la résonance série de cette pièce à main et, en cours de travail, les conditions de fonctionnement doivent varier de façon à rester à la résonance.

Suivant l'invention on suivra la fréquence en observant le déphasage qui existe entre la tension et le courant fourni et en compensant électriquement la capacité intrinsèque du transducteur. Un tel circuit électrique se traduit à la résonance série par une impédance faible et un déphasage nul.

La présente invention a ainsi pour but de proposer un tel dispositif d'asservissement du transducteur piézo-électrique d'un générateur de vibrations pour pièce à main dentaire apte à fonctionner en permanence à la fréquence de résonance série, et ce quelle que soit la nature des tissus sur laquelle l'outil équipant cette pièce à main est amené à intervenir.

La présente invention a ainsi pour objet un dispositif d'asservissement d'une pièce à main dentaire activée par un générateur à ultrasons, comportant des moyens d'alimentation de fréquence donnée, caractérisé en ce que :

- il comporte deux circuits, à savoir un circuit de travail aux bornes duquel est relié le générateur à ultrasons, et un circuit de pilotage,
- le circuit de travail comporte une inductance en parallèle entre ses bornes de sortie,
- l'alimentation est apte à délivrer en sortie une tension en phase avec une tension qui lui est délivrée sur son entrée,
- le circuit de pilotage est constitué d'un transformateur d'intensité dont le primaire est disposé en série dans le circuit de travail et dont le secondaire forme, avec une capacité et une résistance qui lui sont associées un circuit RLC dont la tension aux bornes de la résistance est envoyée à l'entrée de la susdite alimentation,
- le circuit de pilotage comporte des moyens permettant de faire varier la valeur de la capacité et/ou celle de la self du secondaire du transformateur d'intensité.

Préférentiellement le secondaire du transformateur d'intensité comporte un noyau mobile à l'intérieur de son enroulement apte à faire varier son inductance.

Les moyens d'alimentation seront reliés au circuit de travail, dans un mode de mise en oeuvre préférentiel, par l'intermédiaire d'un transformateur de tension dont les inductances du primaire et du secondaire seront élevées.

Dans un mode de mise en oeuvre intéressant de l'invention l'inductance disposée entre les bornes de sortie du circuit de travail sera telle qu'avec la capacité intrinsèque de la pièce à main et la résistance interne de celle-ci on forme un circuit RLC proche de la résonance.

On décrira ci-après à titre d'exemple non limitatif une forme d'exécution de la présente invention, en référence au dessin annexé sur lequel :

La figure 1 est une vue schématique d'un dispositif de suivi en fréquence suivant l'invention.

La figure 2 est un schéma représentant les déphasages entre courant et intensité dans un circuit du type de celui représenté sur la figure 1.

La figure 3 est une courbe représentant la variation du déphasage entre courant et tension dans un circuit suivant l'invention en fonction d'un multiple de la fréquence.

La figure 4 est une courbe représentant les variations respectives en fonction de la fréquence, de la puissance fournie à une pièce à main spécifique et du déphasage entre courant et intensité correspondant.

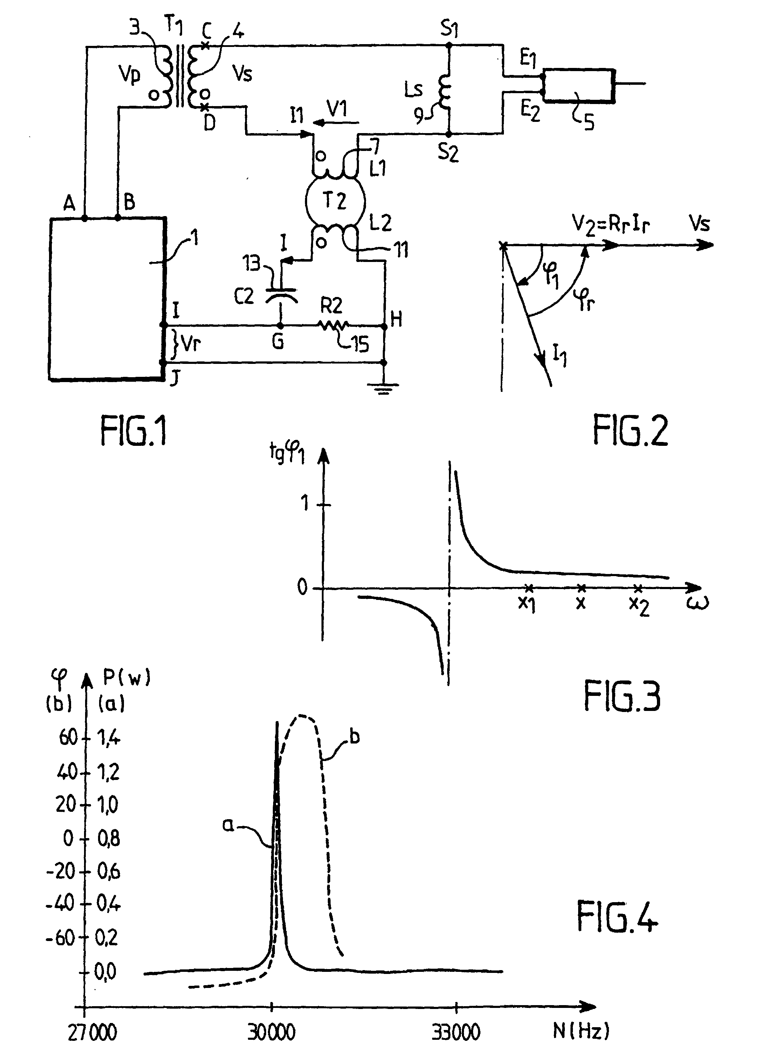

L'oscillateur de suivi en fréquence représenté sur la figure 1 est essentiellement constitué d'une alimentation 1 en mesure de générer entre ses deux bornes de sortie A et B une tension $V_p$ qui alimente le primaire 3 d'un transformateur de tension $T_1$. L'une des bornes C du secondaire 4 de ce transformateur est reliée à une sortie S1 du circuit à laquelle vient se connecter une entrée $E_1$ d'une pièce à main 5. L'autre borne D de ce même secondaire 4 est reliée à l'autre sortie S2 du circuit avec interposition du primaire 7 d'un transformateur de courant $T_2$. La seconde entrée E2 de la pièce à main 5 vient se relier à la borne S2. Une inductance 9 de valeur $L_s$ est disposée en parallèle entre les

bornes d'entrée $E_1$ et $E_2$ de la pièce main 5.

Ainsi que représenté sur la figure 1 le secondaire 11 du transformateur d'intensité $T_2$ est disposé en série avec une capacité 13 de valeur $C_2$ et une résistance 15 de valeur $R_2$, cette dernière représentant les résistances parasites du circuit RLC ainsi formé.

Les bornes G et H de la résistance 15 sont réunies à des bornes d'entrée IJ de l'alimentation 1.

On a ainsi deux circuits à savoir un circuit de travail qui commande la pièce à main 5 et un circuit de pilotage constitué par le circuit RLC.

L'alimentation 1 est constituée de façon que la tension $V_p$ produite sur ses bornes de sortie A,B soit en phase avec la tension $V_r$ existant entre ses bornes d'entrées I et J.

Dans ces conditions ainsi que représenté sur le schéma de la figure 2, pour que l'oscillateur constitué par la self 11, la capacité 13 et la résistance 15 entre en oscillation, il est nécessaire que le signal de tension $V_r$ recueilli aux bornes de la résistance $R_2$ se trouve en phase avec $V_s$, condition qui se réalisera si φ2 = - φ1. En effet φ2 et φ1 représentent le déphasage entre tension et intensité respectivement dans le circuit oscillant de pilotage RLC et dans le circuit de travail commandant les vibrations de la pièce à main 5.

Si l'on exprime la tension $V_r$ existant entre les bornes d'entrée I et J de l'alimentation 1 en fonction du courant $I_1$ circulant dans le primaire 7 du transformateur T2 on notera que le courant $I_1$ est en retard de φ1 par rapport à la tension $V_s$ (ou à la tension $V_p$) et que la tension $V_r$ est en phase avec le courant $I_2$.

Si l'on tient compte des équations du transformateur on obtiendra, en utilisant la notification mathématique complexe :

$$V_1 = Z_1 I_1 + jm\omega I_2 \text{ avec } Z_1 = jL_1\omega \tag{1}$$

$$0 = Z_2 I_2 + jm\omega I_1 \text{ avec } Z_2 = R_2 + j(L_2\omega - 1/C_2\omega \tag{2}$$

m représentant le coefficient d'inductance mutuelle de l'un des enroulements du transformateur sur l'autre enroulement.

De façon connue, le transformateur $T_2$ étant un transformateur d'intensité, on peut négliger l'influence de l'enroulement secondaire sur l'enroulement primaire si bien que l'expression $jm\omega I_2 = 0$ et, de l'équation (1), on tire la valeur de $I_1$ soit :

$$I_1 = V_1 / jL_1\omega = -jV_1 / L_1\omega$$

En reportant cette valeur dans l'équation (2) on obtient l'expression du courant $I_1$ dans le circuit de travail en fonction du courant $I_2$ dans le circuit RLC soit :

$$I_1 = 1/m\omega \ (1/C_{2\omega}-L_{2\omega}+jR_2) \ I_2$$

Dans ces conditions le déphasage du courant $I_2$ par rapport au courant $I_1$ sera :

$$tg\varphi_2 = R_2/\omega \ / \ (1/C_2\omega - L_2\omega) = R_2 C_2\omega/1-L_2 C_2\omega^2 \tag{3}$$

Dans ces conditions, comme mentionné précédemment, il y aura oscillation si $\varphi_2 = -\varphi_1$ ou $t_g\varphi_2 = -t_g\varphi_1$, soit à partir de l'équation (3) :

$$R_2 C_2\omega/1-L_2 C_2\omega^2 = -t_g\varphi_1 \tag{4}$$

On a représenté sur la figure 3 la variation de la valeur de $t_g\varphi_1$ en fonction de la valeur de $\omega$ qui représente la fréquence de vibration, à la valeur de $2\pi$ près ($\omega=2\pi N$)

On remarquera que, sans pièce à main, la charge de l'oscillateur dans le circuit de travail se réduit à 1a valeur de l'inductance Ls disposée en parallèle entre les bornes de sortie $S_1$ et $S_2$ du circuit. Par ailleurs si on désigne par $R_s$ la résistance interne de l'oscillateur le déphasage du courant $I_1$ par rapport à $V_s$ s'exprime par l'expression :

$$t_{g\varphi} = L_s/R_s$$

La condition d'oscillation $tg\varphi_2 = -tg\varphi_1$ devient alors :

$$R_2C_2\omega/ (1-L_2C_2\omega^2) =-L_s\omega_s/R_s$$

soit

$$\omega^2 = (L_s+R_sR_2C_2) / (L_sL_2C_2) \qquad\qquad (5)$$

En jouant sur les valeurs de $L_2$ de l'enroulement du secondaire 11 du transformateur $T_2$ et/ou la valeur $C_2$ du condensateur 13 on peut donc ajuster la fréquence de l'oscillateur à vide si bien que l'on modifie la courbe d'accrochage représentée sur la figure 3.

Dans la pratique $R_2$ représente les résistances parasites du circuit et on conservera $C_2$ constant.

Pour chaque appareil d'une série donnée il suffira alors de faire varier la valeur $L_2$ du secondaire 11 du transformateur $T_2$ jusqu'à ce que la tension $T_1$ soit en phase avec le courant $I_1$ circulant dans le circuit.

L'appareil sera alors étalonné et l'oscillateur "s'accrochera" sur la charge inductive de retard $L_s$.

Par ailleurs on dispose, ainsi que représenté sur la figure 4, d'une courbe représentant la variation de la puissance aux bornes E1, E2 de la pièce à main 5 ainsi que la valeur du déphasage entre courant et intensité aux bornes de celle-ci. Chaque type de pièce à main 5 pourvue d'un outil déterminé possédera ainsi une courbe de ce type.

On constate, sur l'exemple de la figure 4, que la puissance est maximale et que le déphasage est nul pour une fréquence aux environs de 30kHz. Cette valeur reportée au point X sur le schéma de la figure 3 montre que le réglage du circuit RLC est correct puisque la valeur de $tg\varphi_1$ pour cette fréquence est proche de 0.

On sait, bien entendu, qu'au cours du fonctionnement de la pièce à main, la valeur de la fréquence pour laquelle on obtient une vibration maximale à déphasage nul varie en fonction d'une part de la nature physique de la pièce à main mais également en fonction de l'état de surface de la matière à traiter. Pour une pièce à main et un outil donné on obtiendra donc deux fréquences extrêmes $N_1$ et $N_2$ correspondant à un travail de l'outil sur des tissus mous et des éléments plus durs, auxquelles correspondront des valeurs $X_1$ et $X_2$ de $\omega$, ainsi que représenté sur la figure 3.

On a constaté qu'en général la fréquence N se situait aux environs de 30kHz. Dans ces conditions on fera en sorte de procéder à un réglage à vide de chaque circuit produit (par réglage par exemple de la valeur de $L_2$) de façon qu'en cours de travail les points $X_1$ et $X_2$ se trouvent bien dans des zones pour lesquelles $tg_1$ est proche de zéro, ainsi que représenté sur la figure 3.

La variation de l'inductance $L_2$ pourra notamment être obtenue par déplacement d'un noyau au centre de la self 11.

**Revendications**

**1.** Dispositif d'asservissement d'une pièce à main dentaire (5) activée par un générateur à ultrasons, comportant des moyens d'alimentation (1),

- comportant deux circuits, à savoir un circuit de travail aux bornes (S1, S2) duquel est relié le générateur à ultrasons, et un circuit de pilotage, et dans lequel :

  - le circuit de travail comporte une inductance ($L_s$) en parallèle entre ses bornes de sortie (S1 S2),
  - l'alimentation (1) est apte à délivrer en sortie (A,B) une tension ($V_s$) en phase avec une tension qui lui est délivrée sur son entrée (I,J),
  - le circuit de pilotage est constitué d'un transformateur d'intensité ($T_2$) dont le primaire (7) est disposé en série dans le circuit de travail et dont le secondaire (11) forme, avec une capacité (13) et une résistance (15) qui lui sont associées, un circuit RLC dont la tension aux bornes de la résistance (15) est envoyée à l'entrée de la susdite alimentation (1),
  - le circuit de pilotage comporte des moyens permettant de faire varier la valeur de la capacité (13) et/ou celle de la self du secondaire (11) du transformateur ($T_2$).

**2.** Dispositif suivant la revendication 1 **caractérisé en ce que** le secondaire (11) du transformateur d'intensité ($T_2$)

comporte un noyau mobile à l'intérieur de son enroulement apte à faire varier son inductance ($L_2$).

**3.** Dispositif suivant l'une des revendications 1 ou 2 **caractérisé en ce que** les moyens d'alimentation (1) sont reliés au circuit de travail par l'intermédiaire d'un transformateur de tension ($T_1$).

**4.** Dispositif suivant l'une des revendications précédentes **caractérisé en ce que** l'inductance ($L_s$) disposée entre les bornes de sortie ($S_1$, $S_2$) du circuit de travail est telle qu'avec la capacité intrinsèque de la pièce à main (5) et la résistance interne de celle-ci on forme un circuit RLC proche de la résonance.

## Claims

**1.** Power assistance device for a dental handpiece (5) activated by an ultrasound generator, comprising supply means (1), comprising two circuits, namely an operating circuit, to the terminals (S1, S2) of which the ultrasound generator is connected, and a pilot circuit, and in which:

- the operating circuit comprises an inductance ($L_s$) in parallel between its output terminals (S1, S2),
- the supply (1) is adapted to deliver at output (A, B) a voltage ($V_s$) in phase with a voltage which is delivered thereto on its input (I, J),
- the pilot circuit is constituted by an intensity transformer ($T_2$) of which the primary (7) is arranged in series in the operating circuit and of which the secondary (11) forms, with a capacitor (13) and a resistor (15) which are associated therewith, an RLC circuit of which the voltage at the terminals of the resistor (15) is sent to the input of the said supply (1),
- the pilot circuit comprises means for varying the value of the capacitor (13) and/or that of the self-induction coil of the secondary (11) of the transformer ($T_2$)

**2.** Device according to Claim 1, **characterized in that** the secondary (11) of the intensity transformer ($T_2$) comprises a mobile core within its winding adapted to vary its inductance ($L_2$).

**3.** Device according to one of Claims 1 or 2, **characterized in that** the supply means (1) are connected to the operating circuit via a voltage transformer ($T_1$).

**4.** Device according to one of the preceding Claims, **characterized in that** the inductance ($L_s$) arranged between the output terminals ($S_1$, $S_2$) of the operating circuit is such that, with the intrinsic capacitor of the handpiece (5) and the internal resistor thereof, an RLC circuit close to resonance is formed.

## Patentansprüche

**1.** Vorrichtung zum Regeln eines dentalen Handstückes (5), das durch einen Ultraschallgenerator aktiviert wird, Speisemittel (1) aufweisend,

- zwei Stromkreise aufweisend, nämlich einen Anschluss-Arbeitsstromkreis (S1 S2), mit dem der Ultraschallgenerator verbunden ist, und einen Steuerstromkreis, und in welcher Vorrichtung
- der Arbeitsstromkreis eine Induktivität ($L_s$) parallel zwischen seinen Ausgangsanschlüssen (S1, S2) aufweist,
- die Speisung (1) in der Lage ist, am Ausgang (A, B) eine Spannung ($V_s$) bereitzustellen, die mit einer Spannung in gleicher Phase ist, die ihr an ihrem Eingang (I, J) bereitgestellt wird,
- der Steuerstromkreis aus einem Stromwandler ($T_2$) gebildet ist, dessen Primärseite (7) in Serie im Arbeitsstromkreis angeordnet ist und dessen Sekundärseite (11) mit einer Kapazität (13) und einem Widerstand (15), die ihm zugeordnet sind, eine RLC-Schaltung bildet, deren Spannung in den Anschlüssen des Widerstandes (15) an den Eingang der vorgenannten Speisung (1) gesendet wird,
- der Steuerstromkreis Mittel aufweist, die gestatten, den Wert der Kapazität (13) und/oder denjenigen der Drossel der Sekundärseite (11) des Wandlers ($T_2$) zu variieren.

**2.** Vorrichtung nach Anspruch 1,
**dadurch gekennzeichnet, dass** die Sekundärseite (11) des Stromwandlers ($T_2$) einen mobilen Kern innerhalb ihrer Wicklung aufweist, die in der Lage ist, ihre Induktivität ($L_2$) zu variieren.

3. Vorrichtung nach Anspruch 1 oder 2,
**dadurch gekennzeichnet, dass** die Speisemittel (1) mit dem Arbeitsstromkreis mittels eines Spannungswandlers $(T_1)$ verbunden sind.

4. Vorrichtung nach einem der vorstehenden Ansprüche,
**dadurch gekennzeichnet, dass** die Induktivität $(L_s)$, die zwischen den Ausgangsanschlüssen $(S_1, S_2)$ des Arbeitsstromkreises angeordnet ist, derart ist, dass mit der intrinsischen Kapazität des Handstückes (5) und seinem Innenwiderstand ein RLC-Widerstand in Umgebung der Resonanz gebildet wird.

FIG.1

FIG.2

FIG.3

FIG.4